(19) Europäisches Patentamt
European Patent Office
Office européen des brevets

(11) **EP 3 267 224 B1**

(12) **EUROPÄISCHE PATENTSCHRIFT**

(45) Veröffentlichungstag und Bekanntmachung des Hinweises auf die Patenterteilung:
**27.02.2019   Patentblatt 2019/09**

(51) Int Cl.:
*G01S 17/10* $^{(2006.01)}$       *G01S 17/42* $^{(2006.01)}$
*G01S 17/89* $^{(2006.01)}$       *G01S 7/487* $^{(2006.01)}$
*G01S 13/20* $^{(2006.01)}$       *G01S 13/22* $^{(2006.01)}$

(21) Anmeldenummer: **16178128.1**

(22) Anmeldetag: **06.07.2016**

(54) **VERFAHREN ZUR ENTFERNUNGSMESSUNG**

METHOD FOR DISTANCE MEASUREMENT

PROCÉDÉ DE TÉLÉMÉTRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.01.2018   Patentblatt 2018/02**

(73) Patentinhaber: **Riegl Laser Measurement Systems GmbH**
**3580 Horn (AT)**

(72) Erfinder: **ULLRICH, Andreas**
**3003 Gablitz (AT)**

(74) Vertreter: **Weiser, Andreas**
**Patentanwalt**
**Kopfgasse 7**
**1130 Wien (AT)**

(56) Entgegenhaltungen:
**JP-A- S60 218 087       US-A- 4 688 044**
**US-A- 4 954 830**

• **WEBB P ET AL: "Suppression of second-time around echoes in high firing rate ultrasonic transducers", NDT & E INTERNATIONAL, BUTTERWORTH-HEINEMANN, OXFORD, GB, Bd. 28, Nr. 2, 1. April 1995 (1995-04-01), Seiten 89-93, XP002539650, ISSN: 0963-8695, DOI: 10.1016/0963-8695(94)00011-8**

## Beschreibung

Die vorliegende Erfindung betrifft ein Verfahren zur Entfernungsmessung von Umgebungszielen durch Laufzeitmessung von daran reflektierten Impulsen. Die Impulse können beliebiger Art sein, z.B. Lichtimpulse, insbesondere Laserimpulse, Funkimpulse, insbesondere Radarimpulse, Schallimpulse od. dgl. Die Erfindung betrifft ferner ein Verfahren zum Laserscannen durch Richten von Laserimpulsen fortlaufend auf verschiedene Umgebungsziele.

Die US 4 688 044 A offenbart ein Verfahren gemäß dem Oberbegriff des Anspruchs 1 zum Löschen von Echos aus nichtinteressierenden MTA-Zonen; eine MTA-Zonenzuordnung ist dabei nicht vorgesehen.

Moderne Impulslaufzeit-Entfernungsmesser wie Laserentfernungsmesser bzw. -scanner arbeiten mit hoher Impulsleistung über große Entfernungen und/oder hoher Impulswiederholungsrate zur raschen Erstellung einer Vielzahl von Entfernungsmesspunkten der Umgebung. In beiden Fällen kann sich die Situation ergeben, dass der nächste Impuls schon ausgesandt wird, noch bevor die Reflexion des letzten Impulses empfangen wurde, sodass die eintreffenden Empfangsimpulse nicht mehr eindeutig ihrem jeweiligen Sendeimpuls zugeordnet werden können. Dies ist als "multiple time around"- (MTA) bzw. "multiple pulses in the air"-Problem bekannt. Die maximale Größe $d_{max}$ des eindeutig vermessbaren Entfernungsbereiches, der sog. MTA-Zone, ergibt sich dabei aus der Impulswiederholungsrate (pulse repetition rate) PRR und der Lichtgeschwindigkeit c zu

$$d_{max} = \frac{1}{2} \cdot \frac{c}{PRR} \qquad\qquad (1)$$

Laserscanner moderner Bauart bieten beispielsweise Impulswiederholungsraten von bis zu 1200 kHz, was einer MTA-Zonengröße $d_{max}$ von etwa 125 m entspricht. Wird diese Messdistanz überschritten, ist das Messergebnis aufgrund der nicht eindeutigen Zuordenbarkeit der Sende- und Empfangsimpulse in der Regel nicht korrekt interpretierbar.

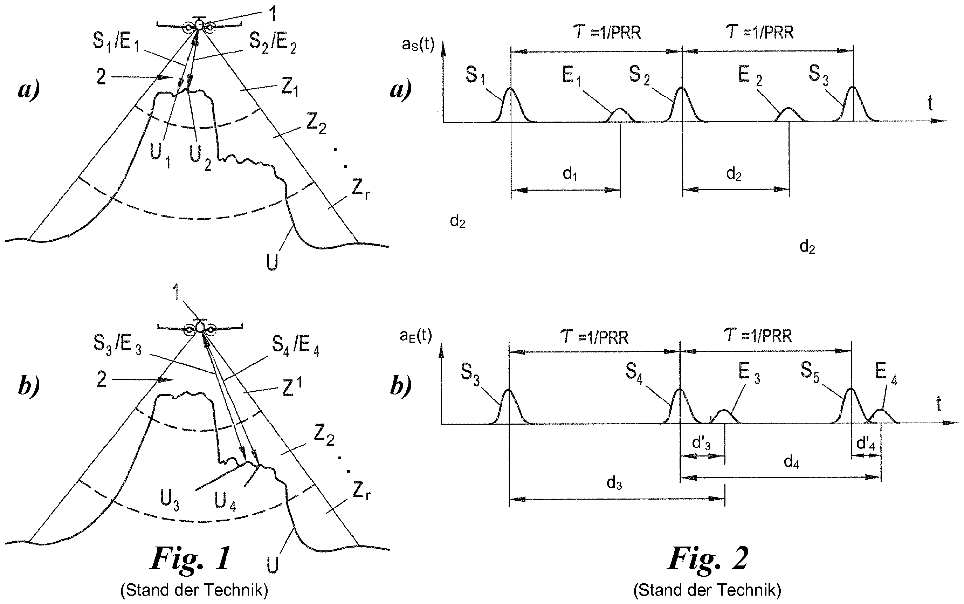

Die Fig. 1 und 2 zeigen diese Situation im Detail. Von einem z.B. flugzeuggestützten Laserscanner 1 wird ein gepulster Lasermessstrahl 2 abtastend über eine Umgebung U mit einzelnen Umgebungszielen (Abtastpunkten) $U_1$, $U_2$,... geführt, z.B. zeilenweise fächerförmig. Aus Laufzeitmessungen an den einzelnen ausgesandten Impulsen $S_1$, $S_2$,..., die nach der Umgebungsreflexion als Empfangsimpulse $E_1$, $E_2$,... zurückerhalten werden, können die Zielentfernungen $d_1$, $d_2$,... zu den einzelnen Umgebungszielen $U_1$, $U_2$,... bestimmt werden.

Die Fig. 1a und 2a zeigen eine beispielhafte Situation bei der Vermessung von Umgebungszielen $U_1$, $U_2$, die in der ersten, dem Laserscanner 1 nächstgelegenen MTA-Zone $Z_1$ liegen: Der zum Sendeimpuls $S_1$ gehörende Empfangsimpuls $E_1$ wird zurückerhalten, bevor der nächste Sendeimpuls $S_2$ im Zeitabstand $\tau = 1/PRR$ ausgesandt wird, usw. usf.

Die Fig. 1b und 2b zeigen eine beispielhafte Situation, wenn Umgebungsziele $U_3$, $U_4$ in der zweiten MTA-Zone $Z_2$ liegen: Hier wird der zum Sendeimpuls $S_3$ gehörende Empfangsimpuls $E_3$ erst empfangen, nachdem bereits der nächste Sendeimpuls $S_2$ ausgesandt wurde. Zur Bestimmung der korrekten Entfernung $d_3$ des Umgebungsziels $U_3$ in der Zone $Z_2$ ist es notwendig, den Empfangsimpuls $E_3$ korrekt dem Sendeimpuls $S_3$ zuzuordnen; wird der Empfangsimpuls $E_3$ fälschlich dem unmittelbar vorhergehenden Sendeimpuls $S_4$ zugeordnet, ergibt sich eine falsche Zielentfernung $d_3'$ in der falschen MTA-Zone $Z_1$, anstelle der richtigen Zielentfernung $d_3$ in der richtigen MTA-Zone $Z_2$.

Zur MTA-zonenrichtigen gegenseitigen Zuordnung der Sende- und Empfangsimpulse und damit Überwindung der MTA-Zonengrenzen für eindeutige Entfernungsmessungsergebnisse sind verschiedenste Verfahren bekannt, siehe beispielsweise die Patente AT 510.296, AT 511.310 und AT 515.214 derselben Anmelderin. Die Erfindung setzt sich zum Ziel, die bekannten Verfahren weiter zu verbessern, so dass sie auch in schwierigen Zielsituationen, wie Mehrfachreflexionen eines einzigen Sendeimpulses an Umgebungszielen in unterschiedlichen MTA-Zonen oder bei MTA-zonenüberschreitenden Entfernungssprüngen in der zu vermessenden Umgebung, korrekte Entfernungsmesswerte liefern.

Dieses Ziel wird gemäß der Erfindung mit einem Verfahren zur Entfernungsmessung von Umgebungszielen durch Laufzeitmessung von daran reflektierten Impulsen, insbesondere Laserimpulsen, erreicht, welches umfasst:

Aussenden einer Folge von Sendeimpulsen mit variierenden Impulsabständen und Empfangen zumindest eines Empfangsimpulses nach jeweils einem von zwei verschiedenen Sendeimpulsen;

für jeden Empfangsimpuls: Erzeugen einer Gruppe von M Kandidatenentfernungen jeweils bezogen auf einen anderen von M dem Empfangsimpuls vorangegangenen Sendeimpulsen, wobei jede Kandidatenentfernung dem jeweiligen Sendeimpuls, auf den sie bezogen ist, zugeordnet wird;

für jede Kandidatenentfernung: Ermitteln eines Gewichtungswerts basierend zumindest auf der entfernungsnächsten der einem solchen Sendeimpuls zugeordneten Kandidatenentfernungen, welcher dem Sendeimpuls benachbart ist, dem die für dieses Ermitteln betrachtete Kandidatenentfernung zugeordnet ist;

für jede Gruppe: Auswählen der Kandidatenentfernung mit dem höchsten Gewichtungswert als Entfernungsmesswert des Empfangsimpulses, für den die Gruppe erzeugt wurde.

Das erfindungsgemäße Verfahren beruht auf einer neuartigen Gewichtungsauswertung einer Vielzahl von Entfernungsmesswert-Kandidaten, hier kurz "Kandidatenentfernungen" genannt, welche jeweils bezüglich unterschiedlicher vorangegangener Sendeimpulse einer pulspositionsmodulierten Sendeimpulsfolge berechnet wurden. Die Gewichtungsauswertung ist in der Lage, eine hochzuverlässige Schätzung des jeweils MTA-zonenrichtigen Entfernungsmesswerts für jeden Empfangsimpuls zu erstellen. Das Verfahren der Erfindung liefert auch in Mehrzielsituationen, bei denen ein Sendeimpuls mehrere Empfangsimpulse zur Folge hat, ausgezeichnete MTA-Zonenzuordnungsergebnisse, denn jeder Empfangsimpuls kann gesonder ausgewertet werden.

Eine besonders vorteilhafte Ausführungsform der Erfindung zeichnet sich dadurch aus, dass die Sendeimpulse mit im wesentlichen gleicher Amplitude ausgesendet werden und für jeden Empfangsimpuls auch dessen Amplitude aufgezeichnet wird, und dass der Gewichtungswert zumindest aus:

einem Entfernungsgewicht basierend auf der Entfernungsdifferenz zwischen der betrachteten Kandidatenentfernung und der genannten ortsnächsten Kandidatenentfernung und

einem Amplitudengewicht basierend auf der Amplitudendifferenz zwischen der Amplitude jenes einen Empfangsimpulses, für den die Gruppe mit der betrachteten Kandidatenentfernung erzeugt wurde, und der Amplitude jenes anderen Empfangsimpulses, für den die Gruppe mit der genannten ortsnächsten Kandidatenentfernung erzeugt wurde,

gebildet wird.

Damit werden erstmals Amplitudenwerte der Empfangsimpulse für die MTA-Zonenzuordnung bzw. -auflösung verwendet. Dies beruht auf der Annahme, dass für Umgebungsziele mit annähernd gleicher Reflektivität Empfangsimpulse von weiter entfernten Umgebungszielen eine geringere Amplitude haben als Empfangsimpulse von näher liegenden Umgebungszielen. Durch Berechnung eines Gewichtungswerts für die in Frage kommenden Paarungen von Kandidatenentfernungen für jede mögliche Kandidatenentfernung beruhend auf sowohl der Entfernungsdifferenz als auch der Amplitudendifferenz wird die in der Amplitude der Empfangsimpulse verborgene Entfernungsinformation als zusätzliche Information für die MTA-Zonenauflösung ausgenützt. Im Ergebnis liefert das Verfahren robuste, verlässliche MTA-Zonenzuordnungsergebnisse und damit korrekte Entfernungsmesswerte selbst in schwierigen Zielsituationen wie Mehrfachreflexionen, rasch wechselnden MTA-zonenüberschreitenden Entfernungssprüngen der Umgebung, od.dgl.

Die Entfernungs- und Amplitudendifferenzen können in den Gewichtungswerten ihrerseits auf verschiedenste Weise gewichtet werden, um unterschiedliche Ansprechverhalten des Verfahrens gegenüber Mehrfachreflexionen und Entfernungssprüngen zu realisieren. Bevorzugt wird vorgesehen, dass die Entfernungsdifferenz nicht-linear in das Entfernungsgewicht eingeht, wobei eine größere Entfernungsdifferenz ein unterproportional kleineres Entfernungsgewicht ergibt, und die Amplitudendifferenz nicht-linear in das Amplitudengewicht eingeht, wobei eine größere Amplitudendifferenz ein unterproportional kleineres Amplitudengewicht ergibt, was ein besonders robustes, störungsunanfälliges Ansprechverhalten ergibt.

Gemäß einer ersten bevorzugten Variante des Verfahrens ist bei dem genannten Ermitteln des Gewichtungswerts der benachbarte Sendeimpuls ein *zeitlich* benachbarter Sendeimpuls. Bevorzugt werden dabei für den Gewichtungswert einer Kandidatenentfernung gleich mehrere andere Kandidatenentfernungen beruhend auf mehreren benachbarten Sendeimpulsen berücksichtigt, u.zw. insbesondere solche anderen Kandidatenentfernungen, die den in der Sendeimpulsfolge unmittelbar vorausgehenden und nachfolgenden Sendeimpulsen zugeordnet sind. Damit wird die unmittelbare zeitliche Nachbarschaft des für einen Empfangsimpuls ursächlichen Sendeimpulses für die MTA-Zonenzurordnung untersucht, was die Annahme umsetzt, dass in der Regel mehrere aufeinanderfolgende Sendeimpulse auf Ziele in derselben MTA-Zone treffen. Bevorzugt werden genau ein zeitlich vorangehender und ein zeitlich nachfolgender Sendeimpuls und die diesen zugeordneten Kandidatenentfernungen auf Entfernungsnähe zur jeweils zu gewichtenden Kandidatenentfernung untersucht und für die Gewichtung herangezogen, d.h. pro Kandidatenentfernung zwei Kandidatenentfernungs-Paarungen gewichtet.

Gemäß einer alternativen Variante des erfindungsgemäßen Verfahrens zum Scannen einer Umgebung, indem die Sendeimpulse in ihrer zeitlichen Folge auf örtlich verschiedene Umgebungsziele in der Umgebung ausgesandt werden, ist bei dem genannten Ermitteln des Gewichtungswerts der benachbarte Sendeimpuls ein hinsichtlich der Umgebungsziele *örtlich* benachbarter Sendeimpuls. Diese Ausführungsform berücksichtigt den Umstand, dass beim Scannen einer Umgebung in der Sendeimpulsfolge zeitlich aufeinanderfolgende Sendeimpulse nicht notwendigerweise in der Umgebung örtlich nebeneinanderliegend auftreffen, beispielsweise wenn Laserimpulse mit einem Polygon-Umlenkspiegel zeilenweise abtastend über die Umgebung geführt werden. Örtlich in der Umgebung nebeneinanderliegend auftreffende Laserimpulse können vielmehr auch von Sendeimpulsen stammen, die in der Sendeimpulsfolge nicht direkt, sondern beispielsweise in einem Abstand von einer Abtastzeile bzw. Scanperiode aufeinanderfolgen. Der Begriff "benachbarter" Sendeimpuls wird in der vorliegenden Beschreibung demgemäß als Oberbegriff für die beiden Varianten eines *zeitlich* benachbarten Sendeimpulses oder eines *örtlich* benachbarten Sendeimpulses verstanden.

Bei letzterer Variante werden bevorzugt gleich mehrere dem Sendeimpuls der zu gewichtenden Kandidatenentfernung örtlich benachbarte Sendeimpulse für das Ermitteln des Gewichtungswerts herangezogen. Dazu wird der Gewichtungswert aus Teilgewichten gebildet, wobei jedes Teilgewicht auf der entfernungsnächsten der dem jeweiligen örtlich benachbarten Sendeimpuls zugeordneten Kandidatenentfernungen basiert. Die Teilgewichte werden dann zu dem Gewichtungswert z.B. aufsummiert, und die solcherart gewichtete Kandidatenentfernung berücksichtigt damit gleichsam die lokale Auftreffumgebung ihres ursächlichen Sendeimpulses für die MTA-Zonenauflösung.

Auch bei dieser Ausführungsform kann eine signifikante Steigerung der Treffsicherheit der MTA-Zonenzuordnung und damit Robustheit und Präzision des Entfernungsmessverfahrens erzielt werden, wenn - unter der Voraussetzung, dass die Sendeimpulse mit im Wesentlichen gleicher Amplitude ausgesendet werden und für jeden Empfangsimpuls auch dessen Amplitude aufgezeichnet wird - die genannten Teilgewichte wieder aus einem Entfernungsgewicht und einem Amplitudengewicht zusammengesetzt werden. Auf diese Weise wird erstmals die Amplitude der Empfangsimpulse für die MTA-Zonenzuordnung der Empfangsimpulse unter Berücksichtigung der lokalen Auftreffumgebung jedes Sendeimpulses ausgenützt. Auch diese Ausführungsform beruht auf der Erkenntnis, dass benachbarte auf ein Ziel auftreffende Sendeimpulse meist dieselbe Reflektivität erfahren, so dass aus der Amplitude der Empfangsimpulse wertvolle Zusatzinformation für die MTA-Zonenauflösung gewonnen kann.

Die Entfernungs- und Amplitudendifferenzen in den Teilgewichten des Gewichtungswerts können wieder mit entsprechenden nicht-linearen Gewichtungsfunktionen versehen werden, um die Robustheit des Verfahrens zu steigern.

Gemäß einem weiteren bevorzugten Merkmal der Erfindung können in jeder der genannten Ausführungsformen beim Ermitteln des Gewichtungswerts optional auch nur jene entfernungsnächsten Kandidatenentfernungen berücksichtigt werden, welche innerhalb eines vorgegebenen Entfernungsbereichs rund um die betrachtete Kandidatenentfernung liegen, was Rechenzeit beim Berechnen der Gewichtungswerte spart.

Die Anzahl M an Kandidatenentfernungen einer Gruppe, die für einen Empfangsimpuls erzeugt wird, definiert die Anzahl an möglichen MTA-Zonen, die mit dem Verfahren zugeordnet ("aufgelöst") werden können. Bevorzugt werden beim Erzeugen einer Gruppe die M Kandidatenentfernungen auf M dem Empfangsimpuls unmittelbar vorangegangene Sendeimpulse bezogen, wodurch M unmittelbar an den Aussendeort der Sendeimpulse anschließende MTA-Zone vermessen und aufgelöst werden können.

Für das richtige Zuordnen (Auflösen) von M Stück MTA-Zonen genügt es, wenn beim Aussenden die Impulsabstände gemäß einem sich wiederholenden Code variiert werden, dessen Codelänge größer oder gleich M ist. So genügt beispielsweise zur Auflösung von 7 MTA-Zonen eine Variation der Impulsabstände, die sich nach jeweils 7 Impulsabständen wiederholt, d.h. ein Code mit Codelänge 7.

Die Erfindung wird nachstehend anhand von in den beigeschlossenen Zeichnungen dargestellten Ausführungsbeispielen näher erörtert. In den Zeichnungen zeigen:

Fig. 1 schematisch verschiedene Reflexionssituationen eines gepulsten Laserabtaststrahls an Umgebungszielen, die in verschiedenen MTA-Zonen liegen, nach dem Stand der Technik;
Fig. 2 beispielhafte Zeitdiagramme von Sende- und Empfangsimpulsen für die Reflexionssituationen von Fig. 1 nach dem Stand der Technik;
Fig. 3 eine Mehrzielsituation in einer schematischen Perspektivansicht;
Fig. 4 ein schematisches Blockschaltbild eines Laserscanners zur Durchführung des Verfahrens der Erfindung;
Fig. 5 beispielhafte Zeitdiagramme von Sende- und Empfangsimpulsen im Rahmen des Verfahrens der Erfindung;
Fig. 6 ein Flussdiagramm des Verfahrens der Erfindung;
Fig. 7 ein kombiniertes Zeit- und Zuordnungsdiagramm für Sende- und Empfangsimpulse im Rahmen des Verfahrens der Erfindung;
Fig. 8 auf einer Zielumgebung auftreffende, örtlich zueinander benachbarte Sendeimpulse beim Laserscannen gemäß dem Verfahren der Erfindung;
die Fig. 9a und 9b beispielhafte Gewichtungsfunktionen für Entfernungs- und Amplitudendifferenzen im Rahmen des Verfahrens der Erfindung; und
die Fig. 10a und 10b beispielhafte 3D-Punktewolken von Entfernungsmesspunkten einer Zielumgebung, einmal erstellt mit einem Verfahren nach dem Stand der Technik (Fig. 10a) und einmal mit einem Verfahren gemäß der Erfindung (Fig. 10b).

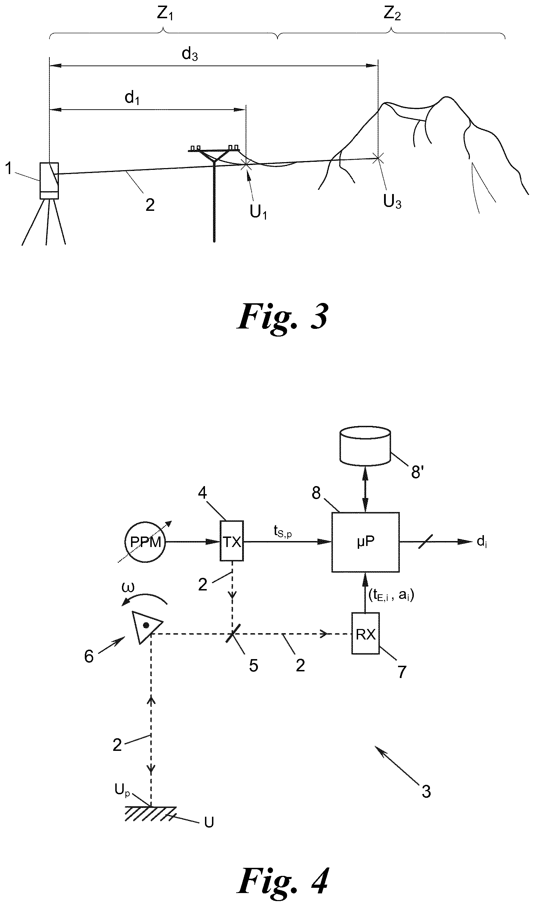

Die Fig. 1 und 2 zeigen die Impulszuordnungsproblematik von MTA-zonenüberschreitenden Entfernungsmess- bzw. Scanbereichen und wurden bereits eingangs erörtert. Verschärft ist diese Problematik noch in sogenannten Mehrzielsituationen gemäß Fig. 3, wo ein einziger Sendeimpuls von mehreren hintereinander liegenden, gegebenenfalls auch in unterschiedlichen MTA-Zonen $Z_1$, $Z_2$ liegenden Umgebungszielen $U_1$, $U_3$ reflektiert wird. Ein stellvertretend betrachteter Sendeimpuls $S_1$ des Lasermessstrahls 2 erfährt z.B. eine erste Reflexion an einem Nahziel $U_1$ in der ersten MTA-Zone $Z_1$, beispielsweise einer Stromleitung, Blattwerk od.dgl., die bzw. das er nur streift, oder einem semitransparenten Zwischenziel wie einer Wolke, einer Glasscheibe usw.; und eine zweite Reflexion an einem Fernziel $U_3$ in derselben oder einer anderen MTA-Zone, hier der zweiten MTA-Zone $Z_2$. Der Laserscanner 1 empfängt in einer solchen Situation für den Sendeimpuls $S_1$ zwei Empfangsimpulse $E_1$, $E_3$. Im Falle von Blattwerk, Wald usw. können auch drei, vier oder mehr Empfangsimpulse $E_i$ pro Sendeimpuls $S_p$ (i, p $\in$ N) empfangen werden. Wenn der Laserentfernungsmesser bzw. -scanner 1 befähigt ist, pro Sendeimpuls $S_p$, insbesondere auch zwischen zwei Sendeimpulsen $S_p$, mehr als einen Empfangsimpuls $E_i$ aufzuzeichnen und zu verarbeiten, wird er als "mehrzielfähig" bezeichnet. Es ist ersichtlich, dass die richtige MTA-Zonenzuordnung eines Empfangsimpulses $E_i$ in einem mehrzielfähigen Entfernungsmesser bzw. Scanner noch wesentlich schwieriger ist als in den Fig. 1 und 2 dargestellt.

Zur Lösung des geschilderten MTA-Zonenzuordnungproblems dient das nun unter Bezugnahme auf die Fig. 4 bis 10 beschriebene Verfahren. Das Verfahren wird anhand eines mehrzielfähigen Laserscanners beschrieben, auch wenn ein solcher dazu nicht zwingend erforderlich ist. So kann das Verfahren auch zur automatischen MTA-Zonenzuordnung ("MTA-Auflösung") bei nichtmehrzielfähigen Laserscannern eingesetzt werden, ebenso auch bei bloßen Laserentfernungsmessern, deren Sendeimpulse nicht über die Umgebung gescannt, sondern fortlaufend auf ein und dasselbe Umgebungsziel gerichtet werden. Schließlich eignet sich das geschilderte Verfahren nicht nur für Entfernungsmessungen durch Laufzeitmessungen an Laserimpulsen sondern an beliebigen Impulsen, seien es Funkimpulse, insbesondere Radarimpulse, Schall- oder Sonarimpulse, elektrische Impulse auf elektrischen Leitungen, z.B. zur Leitungslängenmessung, usw.

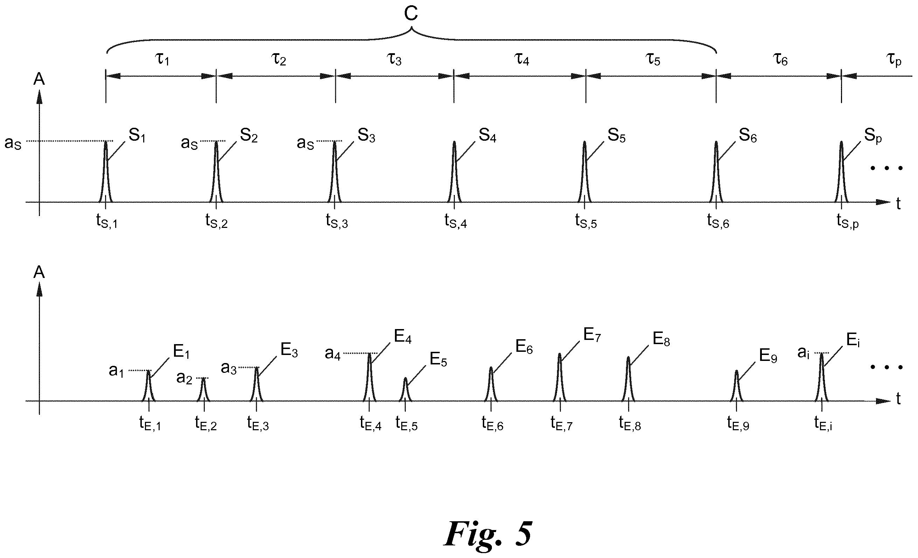

Wie in Fig. 4 und dem oberen Diagramm von Fig. 5 gezeigt, sendet ein mehrzielfähiger Laserscanner 3 mittels eines Lasersenders 4 Sendeimpulse $S_1$, $S_2$, ..., allgemein $S_p$, mit einer im Wesentlichen konstanten Amplitude as zu aufeinanderfolgenden Sendezeitpunkten $t_{s,1}$, $t_{s,2}$, ..., allgemein $t_{s,p}$ aus. Die Impulsabstände $\tau_1 = t_{s,2} - t_{s,1}$, $\tau_2 = t_{s,3} - t_{s,2}$, allgemein $\tau_p = t_{s,p+1} - t_{s,p}$, der Sendeimpulse $S_p$ variieren von Impuls zu Impuls, und zwar entweder zufällig oder bevorzugt gemäß einem sich wiederholenden Muster oder "Code" C mit einer Muster- bzw. Codelänge L. Im gezeigten Beispiel ist die Codelänge L = 5, d.h. nach fünf unterschiedlichen Impulsabstände $\tau_1$, $\tau_2$, $\tau_3$, $\tau_4$, $\tau_5$ ist der sechste Impulsabstand $\tau_6$ wieder gleich dem ersten Impulsabstand $\tau_1$, usw. usf. Eine derartige Impulsabstandsvariation wird auch als Pulspos-sitionsmodulation (PPM) bezeichnet, insoferne, als die einzelnen Impulspositionen (Sendezeitpunkte) $t_{s,p}$ in ihrer Zeitlage gegenüber dem Takt einer konstanten Impulswiederholungsrate (Pulse Repetition Rate, PRR = $1/\tau$ mit dem Code C "pulspositionsmoduliert" sind.

Die Sendeimpulse $S_p$ werden vom Lasersender 4 über einen halbdurchlässigen Spiegel 5 und eine Ablenkeinrichtung 6, z.B. ein rotierendes Polygonspiegelrad, als hin- und herschwingender Lasermessstrahl 2 über die Umgebung U geführt, dort jeweils von einem Umgebungsziel $U_p$ reflektiert, über die Ablenkeinrichtung 6 wieder zurück zum halbdurchlässigen Spiegel 5 geführt, durchsetzen diesen und treffen auf einem Laserempfänger 7 auf. Der Laserempfänger 7 detektiert jeden eintreffenden Empfangsimpuls $E_i$ und misst dessen Empfangszeitpunkt $t_{E,i}$ und Amplitude $a_i$. In dem unteren Diagramm von Fig. 5 ist beispielhaft eine Folge von solchen Empfangsimpulsen $E_i$ mit ihren Empfangs-zeitpunkten $t_{E,i}$ und Amplituden $a_i$ gezeigt.

Sowohl die Sendezeitpunkte $t_{s,p}$ der Sendeimpulse $S_p$ als auch die Dupel ($t_{E,i}$, $a_i$) von Empfangszeitpunkten $t_{E,i}$ und Amplituden $a_i$ der Empfangsimpulse $E_i$ werden einem Prozessor 8 zugeführt und von diesem z.B. in einem Speicher 8' abgelegt. Der Prozessor 8 berechnet - unter Anwendung des nachfolgend beschriebenen Verfahrens durch MTA-zonenrichtige Zuordnung jedes Empfangsimpulses $E_i$ bzw. Dupels ($t_{E,i}$, $a_i$) zu dem dafür ursächlichen Sendeimpuls $S_p$ bzw. Sendezeitpunkt $t_{s,p}$ - die Laufzeit

$$\Delta T_i = t_{S,p} - t_{E,i} \qquad (2)$$

und daraus in bekannter Weise die Entfernung

$$d_i = \Delta T_i \cdot c / 2 \; . \qquad (3)$$

Da die Laufzeiten $\Delta T_i$ und die Entfernungsmesswerte $d_i$ der Umgebungsziele zueinander proportional sind, werden in der vorliegenden Beschreibung Laufzeiten und Entfernungen auch synonym und austauschbar verwendet.

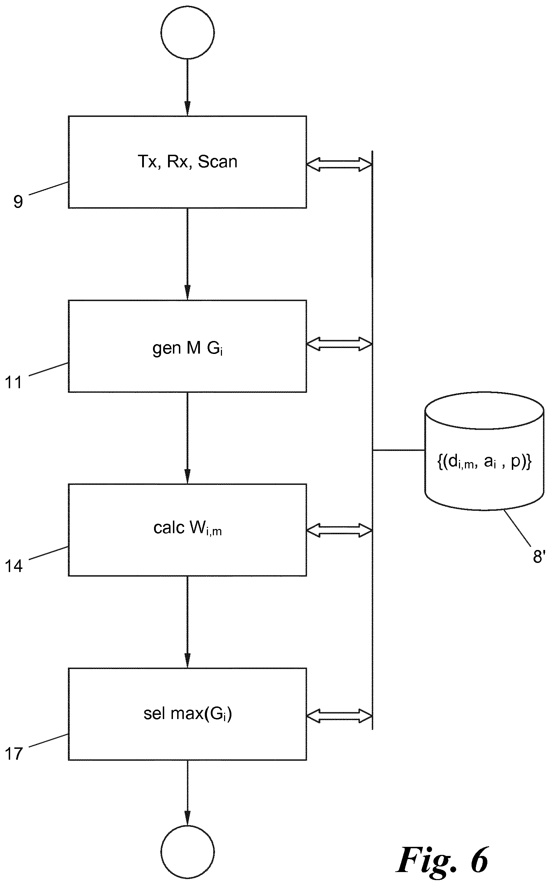

Um für die Entfernungsmessung jeden Empfangsimpuls $E_i$ dem "richtigen", ursächlichen Sendeimpuls $S_p$ zu-zuordnen bzw. umgekehrt zu einem Sendeimpuls $S_p$ den - bzw. bei Mehrzielsituationen die - "richtigen" Empfangsim-puls(e) $E_i$ aus der Folge von Empfangsimpulsen $\{E_i\}$ und daraus schließlich den richtigen Entfernungsmesswert $d_i$ für jedes Umgebungsziel $U_p$ zu ermitteln, führt der Prozessor 8 das anhand der Fig. 6 bis 9 beschriebene Verfahren aus.

Der erste Schritt 9 des Verfahrens von Fig. 6 bezieht sich auf das soeben beschriebene Aussenden der Folge $\{S_p\}$ von Sendeimpulsen $S_p$ mit variierenden Impulsabständen $\tau_p$ (Fig. 5) und das begleitende Empfangen und Aufzeich-nen der Folge $\{E_i\}$ von Empfangsimpulsen $E_i$ und Messen ihrer Empfangszeitpunkte $t_{E,i}$ und Amplituden $a_i$. Wenn das

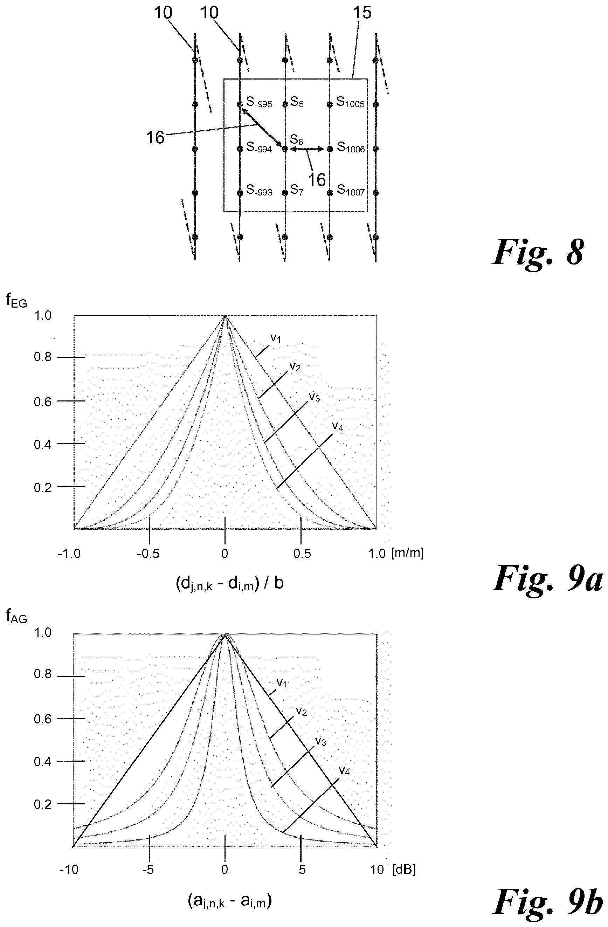

Verfahren in einem Laserscanner 3 mit einer Strahlablenkeinrichtung 6 ausgeführt wird, welche den Laserstrahl 2 über die Umgebung U scannt, beispielsweise in nebeneinanderliegenden Abtastzeilen 10 wie später in Fig. 8 gezeigt, so dass die zeitlich aufeinanderfolgenden Sendeimpulse $S_p$ auch ein örtlich verteiltes Muster von von den Sendeimpulsen $S_p$ getroffenen Umgebungszielen $U_p$ in der Umgebung U ergeben, erfolgt dieses Scannen ebenfalls in Schritt 9.

In einem nächsten Schritt 11 wird nun für jeden Empfangsimpuls $E_i$ eine Gruppe $G_i$ von M Stück Entfernungsmesswert-Kandidaten, kurz "Kandidatenentfernungen", $d_{i,m}$ erzeugt, mit m = 1 ... M. Die Anzahl M definiert die Anzahl an MTA-Zonen $Z_r$, die aufgelöst werden können, d.h. in welchen Umgebungsziele $U_p$ MTA-zonenrichtig entfernungsvermessen werden können. Für diese Funktion ist es auch erforderlich, dass die Codelänge L der Impulsabstandsvariation (Pulspositionsmodulation) der Sendeimpulse $S_p$ größer oder gleich M ist.

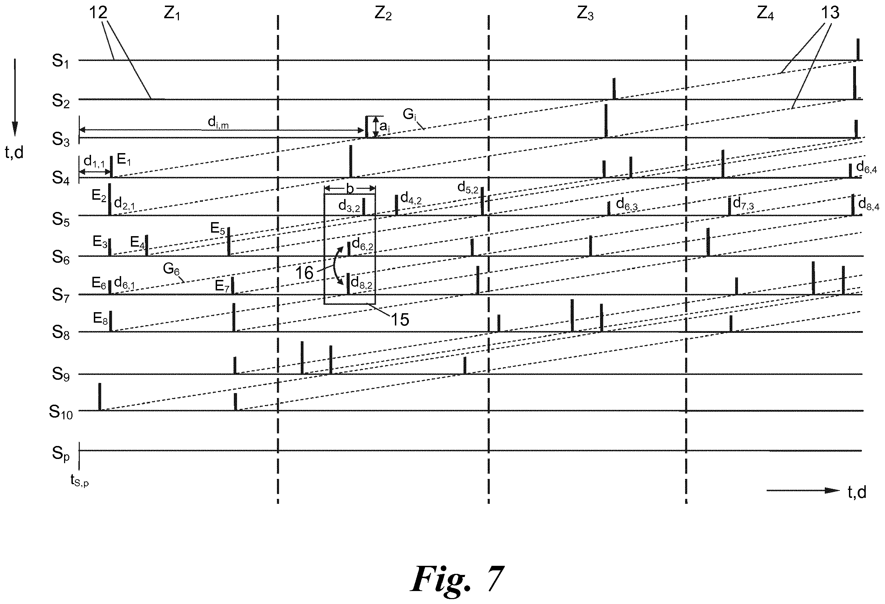

Jede Kandidatenentfernung $d_{i,m}$ einer Gruppe $G_i$ eines Empfangsimpulses $E_i$ ist dabei auf jeweils einen anderen von M dem Empfangsimpuls $E_i$ vorangegangenen Sendeimpulsen $S_p$ bezogen, d.h. wurde aus der Laufzeit zwischen dem Empfangszeitpunkt $t_{E,i}$ dieses Empfangsimpulses $E_i$ und dem Sendezeitpunkt $t_{s,p-m}$ des jeweiligen Sendeimpulses $S_{p-m}$ berechnet, auf den für diese Kandidatenentfernung $d_{i,m}$ Bezug genommen wurde. Dies wird anhand des Diagramms von Fig. 7 im Detail erörtert.

Als Beispiel sei der Empfangsimpuls $E_6$ in Fig. 7 herangezogen, welcher unmittelbar nach dem siebten Sendeimpuls $S_7$ empfangen wurde. Die horizontalen, durchgezogenen Linien 12 des Diagramms von Fig. 7 stellen jeweils zum Sendezeitpunkt $t_{s,p}$ eines Sendeimpulses $S_p$ beginnende Zeitachsen - und damit synonym: Entfernungsachsen - dar, auf welchen - analog zu Fig. 5 - jeweils die nach einem Sendeimpuls $S_p$ bis zum nächsten Sendeimpuls $S_{p+1}$ einlangenden Empfangsimpulse $E_i$ aufgetragen wurden. So wurde nach dem Sendeimpuls $S_4$ der erste Empfangsimpuls $E_1$ empfangen, dann wurde der Sendeimpuls $S_5$ ausgesandt, daraufhin der Empfangsimpuls $E_2$ empfangen, daraufhin der Sendeimpuls $S_6$ ausgesandt, woraufhin drei Empfangsimpulse $E_3$, $E_4$, $E_5$ empfangen wurden, bevor der nächste Sendeimpuls $S_7$ ausgesandt wurde, woraufhin der hier beispielhafte Empfangsimpuls $E_6$ empfangen wurde, usw. usf. Der vertikale Abstand zwischen zwei Zeit- bzw. Entfernungsachsen 12 entspricht in dem Diagramm von Fig. 7 dem jeweiligen Impulsabstand $\tau_p$.

Die Gruppe $G_6$ für den Empfangsimpuls $E_6$ setzt sich in dem Beispiel von Fig. 7 aus M = 4 Kandidatenentfernungen $d_{6,1}$, $d_{6,2}$, $d_{6,3}$ und $d_{6,4}$ zusammen. In dem Diagramm von Fig. 7 sind die Gruppen $G_i$ jeweils durch eine strichlierte Linie 13 versinnbildlicht.

Die Kandidatenentfernungen $d_{6,1}$ bis $d_{6,4}$ berechnen sich jeweils auf Basis der Zeitdifferenz zwischen dem Empfangszeitpunkt $t_{E,6}$ des Empfangsimpulses $E_6$ und dem jeweiligen Sendezeitpunkt $t_{s,7}$, $t_{s,6}$, $t_{s,5}$ und $t_{s,4}$ der M = 4 vorangegangenen Sendeimpulse $S_7$, $S_6$, $S_5$ und $S_4$ zu:

$$d_{6,1} = (t_{E,6} - t_{S,7}) \cdot c/2$$
$$d_{6,2} = (t_{E,6} - t_{S,6}) \cdot c/2$$
$$d_{6,3} = (t_{E,6} - t_{S,5}) \cdot c/2 \qquad (4)$$
$$d_{6,4} = (t_{E,6} - t_{S,4}) \cdot c/2$$

Wie aus Fig. 7 ersichtlich, wird bei der Erzeugung der Gruppen $G_i$ in Schritt 11 gleichzeitig jede Kandidatenentfernung $d_{i,m}$ jenem Sendeimpuls $S_p$ zugeordnet, auf den sie bezogen ist, d.h. im vorliegenden Beispiel:

$$d_{6,1} \to S_7$$
$$d_{6,2} \to S_6$$
$$d_{6,3} \to S_5 \qquad (5)$$
$$d_{6,4} \to S_4$$

Dies ist in Fig. 7 dadurch versinnbildlicht, dass die Kandidatenentfernungen $d_{i,m}$ der Gruppen $G_i$ auf jeweils der Zeit- bzw. Entfernungsachse 12 desjenigen Sendeimpulses $S_p$, dem sie zugeordnet wurden, aufgetragen sind, wodurch sich der schräge Verlauf der Gruppenlinien 13 ergibt.

Jede Kandidatenentfernung $d_{i,m}$ bzw. jedes Dupel $(d_{i,m}, a_i)$ erhält dadurch gleichzeitig einen Sendeimpuls-Index, allgemein p, zugeordnet und wird dadurch zu dem Dupel $(d_{i,m}, p)$ bzw. Tripel $(d_{i,m}, a_i, p)$. Die in Schritt 11 erzeugte Menge $\{(d_{i,m}, p)\}$ bzw. $\{(d_{i,m}, a_i, p)\}$ von Dupeln bzw. Tripeln wird beispielsweise wieder im Speicher 8' gespeichert.

Im nächsten Schritt 14 (Fig. 6) wird nun für jede Kandidatenentfernung $d_{i,m}$ dieser Menge ein Gewichtungswert $W_{i,m}$ wie folgt ermittelt. Der Gewichtungswert $W_{i,m}$ wird auf Basis zumindest einer "Paarung" der jeweils betrachteten, zu gewichtenden Kandidatenentfernung $d_{i,m}$ und zumindest einer "Nachbar"-Kandidatenentfernung $d_{j,n}$ ermittelt. Die für die Paarungen in Frage kommenden Nachbar-Kandidatenentfernungen $d_{j,n}$ liegen in dem Diagramm von Fig. 7 in einem "Fangbereich" 15 rund um die betrachtete Kandidatenentfernung $d_{i,m}$, welcher durch folgende Kriterien definiert ist:

(1) Die Nachbar-Kandidatenentfernung $d_{j,n}$ im Fangbereich 15 ist einem solchen Sendeimpuls $S_{p\pm1}$ zugeordnet (hier: den Sendeimpulsen $S_5$ und $S_7$), welcher jenem Sendeimpuls $S_p$ (hier: $S_6$) benachbart ist, dem die betrachtete, zu gewichtende Kandidatenentfernung $d_{i,m}$ (hier: $d_{6,2}$) zugeordnet ist. Unter einem einem Sendeimpuls $S_p$ "benachbarten" Sendeimpuls wird dabei sowohl ein *zeitlich* benachbarter Sendeimpuls $S_{p\pm1}$, $S_{p\pm2}$, ... wie hier der zeitlich vorangehende Sendeimpuls $S_5$ oder der zeitlich nachfolgende Sendeimpuls $S_7$ betrachtet, oder ein *örtlich* benachbarter Sendimpuls $S_{p\pm x}$ ($x \in N$), wie in Fig. 8 dargestellt.

Fig. 8 zeigt einen solchen *örtlichen* Fangbereich 15 für den hier beispielhaft betrachteten Sendeimpuls $S_6$, dem die hier beispielhafte Kandidatenentfernung $d_{6,2}$ zugeordnet ist. In dem Fangbereich 15 sind dem Sendeimpuls $S_6$ die Sendeimpulse $S_{-995}$, $S_{-994}$, $S_{-993}$, $S_5$, $S_7$, $S_{1005}$, $S_{1006}$ und $S_{1007}$ örtlich benachbart, wenn der Fangbereich 15 eine Größe von 3 x 3 Sendeimpulsen $S_p$ hat. Auch Fangbereiche 15 anderer Größen, z.B. 4 x 3, 4 x 4, 5 x 3, 5 x 4, 5 x 5 usw. sind möglich. Es ist ersichtlich, dass Sendeimpulse $S_p$ aus verschiedenen Abtastzeilen 10 zueinander großen zeitlichen Abstand haben können, hier z.B. einen Abstand von 1000 zwischenliegenden Sendeimpulsen, und dennoch *örtlich* im Fangbereich 15 einander benachbart sein können.

(2) Das zweite Kriterium für Nachbar-Kandidatenentfernungen $d_{j,n}$, welches damit gleichzeitig den Fangbereich 15 definiert, liegt darin, dass es sich bei diesen Kandidatenentfernungen $d_{j,n}$ um die jeweils *entfernungsnächsten* der einem solchen (zeitlich oder örtlich) benachbarten Sendeimpuls jeweils zugeordneten Kandidatenentfernungen handeln muss. In dem Beispiel von Fig. 7 sind dem beispielhaften Nachbar-Sendeimpuls $S_5$ (zeitlicher Nachbar des Sendeimpulses $S_6$, welchem die Kandidatenentfernungen $d_{6,2}$ des Empfangsimpulses $E_6$ zugeordnet ist) die Kandidatenentfernungen $d_{2,1}$, $d_{3,2}$, $d_{4,2}$, $d_{5,2}$, $d_{6,3}$, $d_{7,3}$ und $d_{8,4}$ zugeordnet, und von diesen ist jene mit dem der betrachteten Kandidatenentfernung $d_{6,2}$ nächstliegenden Entfernungswert die Kandidatenentfernung $d_{3,2}$.

Optional kann im Kriterium (2) auch vorgesehen werden, dass Kandidatenentfernungen $d_{j,n}$, die zwar dem Kriterium (2) genügen, jedoch außerhalb eines vorgegebenen Entfernungsbereichs (synonym: Zeitbereichs) rund um die betrachtete Kandidatenentfernung $d_{i,n}$ (hier: $d_{6,2}$) liegen, *nicht* berücksichtigt werden. Ein solcher Entfernungsbereich ist in dem Diagramm von Fig. 7 als horizontale Breite b des Fangbereichs 15 auf den Zeit- bzw. Entfernungsachsen 12 ablesbar; alle Kandidatenentfernungen $d_{j,n}$ außerhalb der Breite b des Fangbereichs 15 bleiben im weiteren Verfahren unberücksichtigt.

All jene Kandidatenentfernungen $d_{j,n}$, welche den beiden obigen Kriterien (1) und (2) genügen, sich also für den Fangbereich 15 qualifizieren bzw. diesen dadurch definieren, werden im Schritt 14 für die Ermittlung des Gewichtungswerts $W_{i,m}$ der betrachteten Kandidatenentfernung $d_{i,m}$ berücksichtigt. Wenn nur eine sich qualifizierende Kandidatenentfernung $d_{j,n}$ im Fangbereich 15 liegt, z.B. wenn der Fangbereich 15 so klein festgelegt wird, dass nur ein Nachbar-Sendeimpuls berücksichtigt wird und die Breite b klein ist, dann setzt sich der Gewichtungswert $W_{i,m}$ ausschließlich aus einem einzigen Teilgewicht für die Paarung $d_{i,m}$ - $d_{j,n}$ zusammen. Wenn mehrere sich qualifizierende Kandidatenentfernungen $d_{j,n}$ im Fangbereich 15 liegen, wird jeweils ein Teilgewicht $PW_{i,m,k}$ (k = 1 ... K) für jede von K möglichen Paarungen 16 zwischen der betrachteten Kandidatenentfernung $d_{i,m}$ und der jeweiligen damit gepaarten Kandidatenentfernung $d_{j,n,k}$ berechnet und der Gewichtungswert $W_{i,m}$ der Kandidatenentfernung $d_{i,m}$ ergibt sich als

$$W_{i,m} = \sum_k PW_{i,m,k} \qquad (6)$$

mit

$$PW_{i,m,k} = f_1(d_{i,m}, d_{j,n,k}) \qquad (7)$$

bzw.

$$PW_{i,m,k} = f_2((d_{i,m}, a_i), (d_{j,n,k}, a_j)) \qquad (8)$$

Bei k = 1, d.h. nur einer Paarung 16, entspricht das Teilgewicht $PW_{i,m,k}$ direkt dem Gewichtungswert $W_{i,m}$. Bei k > 1 können die K Teilgewichte $PW_{i,m,k}$ auch ihrerseits in unterschiedlich gewichteter Form in den Gewichtungswert

$W_{i,m}$ eingehen, beispielsweise um diagonale Paarungen 16 in einem quadratischen örtlichen Fangbereich 15 wie jenem von Fig. 8 geringer zu gewichten als vertikale oder horizontale Paarungen 16.

In der Funktion $f_1$ von Gleichung (7) berücksichtigt jedes Teilgewicht $PW_{i,m,k}$ die Entfernungsdifferenz zwischen der betrachteten Kandidatenentfernung $d_{i,m}$ und der jeweils gepaarten Kandidatenentfernung $d_{j,n,k}$, d.h.

$$PW_{i,m,k} = EG_{i,m,k} = f_1(d_{i,m}, d_{j,n,k}) = f_{EG}(d_{j,n,k} - d_{i,m}) \qquad (9)$$

Fig. 9a zeigt ein Beispiel einer solchen Entfernungsgewichtsfunktion $f_{EG}$, welche die Entfernungsdifferenz $d_{j,n,k}$ - $d_{i,m}$ der Kandidatenpaarung 16, aufgetragen auf der x-Achse des Diagramms von Fig. 9a und normiert auf die Fangbereichsbreite b, in ein Entfernungsgewicht $EG_{i,m,k}$( aufgetragen auf der y-Achse des Diagramms von Fig. 9a, umrechnet. Fig. 9a zeigt vier verschiedene Varianten $v_i$, $v_2$, $v_3$ und $v_4$ der Entfernungsgewichtsfunktion $f_{EG}$ mit linearem ($v_1$) bzw. zunehmend stärkerem, nicht-linearem Abfall bei größeren Differenzwerten ($v_1$, $v_2$, $v_3$).

Optional und bevorzugt wird das Teilgewicht $PW_{i,m,k}$ - und damit letztlich der Gewichtungswert $W_{i,m}$ - zusätzlich auf Basis der Amplitudenwerte $a_i$ und $a_j$ der an der jeweiligen Paarung 16 beteiligten Kandidatenentfernungen $d_{i,m}$ und $d_{j,n}$ gebildet, wie durch die Funktion $f_2$ in Gleichung (8) veranschaulicht. Dazu wird zunächst die Amplitudendifferenz $a_{j,n,k}$ - $a_{i,m}$ der an der Paarung 16 beteiligten Kandidatenentfernungen $d_{i,m}$ und $d_{j,n}$ mit einer Amplitudengewichtsfunktion $f_{AG}$ zu einem Amplitudengewicht $AG_{i,n,k}$ berechnet zu:

$$AG_{i,m,k} = f_{AG}(a_{j,n,k} - a_{i,m}) \qquad (10)$$

Fig. 9b zeigt vier beispielhafte Varianten $v_1$, $v_2$, $v_3$ und $v_4$ einer solchen Amplitudengewichtsfunktion $f_{AG}$, wobei wieder auf der x-Achse die Amplitudendifferenz $a_{j,n,k}$ - $a_{i,m}$ (in dB) und auf der x-Achse das Amplitudengewicht $AG_{i,m,k}$ aufgetragen ist, u.zw. in vier verschiedenen Varianten $v_1$, $v_2$, $v_3$, $v_4$ mit (in logarithmischem Maßstab) linearem ($v_1$) bzw. zunehmend stärkerem, nicht-linearem Abfall bei größeren Differenzwerten ($v_2$, $v_3$, $v_4$).

Das Teilgewicht $PW_{i,m,k}$ der k-ten Paarung 16 berechnet sich dann aus einer Summe, einer beliebigen Funktion oder bevorzugt einem Produkt des Entfernungsgewichts $EG_{i,m,k}$ und des Amplitudengewichts $AG_{i,m,k}$ zu:

$$PW_{i,m,k} = EG_{i,m,k} \cdot AG_{i,m,k} \qquad (11)$$

Die Teilgewichte $PW_{i,m,k}$ werden dann zu dem Gewichtungswert $W_{i,m}$ aufsummiert wie oben erläutert:

$$W_{i,m} = \sum_k PW_{i,m,k} \qquad (6)$$

Nachdem in Schritt 14 (Fig. 6) auf diese Weise Gewichtungswerte $W_{i,m}$ für alle Kandidatenentfernungen $d_{i,m}$ berechnet worden sind, werden in einem anschließenden Schritt 17 in jeder Gruppe $G_i$ jene Kandidatenentfernungen $d_{i,m}$ ausgewählt, welche den maximalen Gewichtungswert $W_{i,m}$ in der jeweiligen Gruppe Gi haben. Die in einer Gruppe $G_i$ ausgewählten Kandidatenentfernung $d_{i,m}$ stellt nun den Entfernungsmesswert $d_i$ jenes Empfangsimpulses $E_i$, für den die Gruppe $G_i$ erzeugt wurde, dar:

$$d_i = \{d_{i,m} | \max(W_{i,m})\} \qquad (12)$$

Damit ist nun für jeden Empfangsimpuls $E_i$ ein Entfernungsmesswert $d_i$ bestimmt, welcher optimal MTA-zonenrichtig ist.

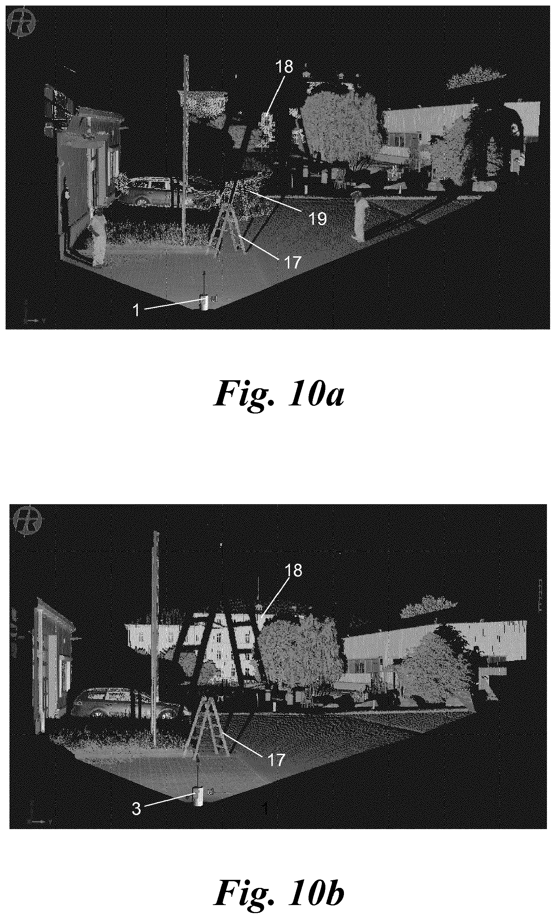

Fig. 10 zeigt die Leistungsfähigkeit des vorgestellten Verfahrens anhand zweier Beispiele einer 3D-Punktewolke von Entfernungsmesspunkten einer Umgebung, und zwar einmal mit einem herkömmlichen Laserscanner 1 (Fig. 10a) und einmal mit einem nach dem vorgestellten Verfahren arbeitenden Laserscanner 3 (Fig. 10b).

Aus Fig. 10a ist ersichtlich, dass eine in der MTA-Zone $Z_1$ aufgestellte Leiter 17 zu massiven Zuordnungsfehlern einer dahinter in der MTA-Zone $Z_2$ liegenden Gebäudefassade 18 führt, siehe die Artefakte eines fälschlich der MTA-Zone $Z_1$ zugeordneten und damit in der Nähe der Leiter 17 erscheinenden Fassadenelements 19.

Bei dem Beispiel von Fig. 10b wurde das beschriebene Verfahren mit Gewichtungswerten aus acht jeweils aus Entfernungs- und Amplitudengewichten gebildeten Teilgewichten für einen örtlichen 3x3-Fangbereich 15 durchgeführt. Das Verfahren führte zu einer korrekten Zuordnung der gesamten Gebäudefassade 18 zu der weit hinter der Leiter 17 liegenden zweiten MTA-Zone $Z_2$. Der Schatten der Leiter 17 auf der Gebäudefassade 18 ist damit klar erkennbar, ohne dass Teile der Gebäudefassade 18 fälschlich der MTA-Zone $Z_1$ zugeordnet wurden.

**Patentansprüche**

1. Verfahren zur Entfernungsmessung von Umgebungszielen durch Laufzeitmessung von daran reflektierten Impulsen, insbesondere Laserimpulsen, umfassend:

   Aussenden einer Folge von Sendeimpulsen ($S_p$) mit variierenden Impulsabständen ($\tau_p$) und Empfangen zumindest eines Empfangsimpulses ($E_i$) nach jeweils einem von zwei verschiedenen Sendeimpulsen;
   für jeden Empfangsimpuls ($E_i$): Erzeugen einer Gruppe ($G_i$) von M Kandidatenentfernungen ($d_{i,m}$) jeweils bezogen auf einen anderen von M dem Empfangsimpuls ($E_i$) vorangegangenen Sendeimpulsen ($S_p$), wobei jede Kandidatenentfernung ($d_{i,m}$) dem jeweiligen Sendeimpuls ($S_p$), auf den sie bezogen ist, zugeordnet wird; **gekennzeichnet durch**:

   für jede Kandidatenentfernung ($d_{i,m}$): Ermitteln eines Gewichtungswerts ($W_{i,m}$) basierend zumindest auf der entfernungsnächsten der einem solchen Sendeimpuls ($S_p$) zugeordneten Kandidatenentfernungen ($d_{j,n}$), welcher dem Sendeimpuls ($S_p$) benachbart ist, dem die für dieses Ermitteln betrachtete Kandidatenentfernung ($d_{i,m}$) zugeordnet ist;
   für jede Gruppe ($G_i$): Auswählen der Kandidatenentfernung ($d_{i,m}$) mit dem höchsten Gewichtungswert ($W_{i,m}$) als Entfernungsmesswert ($d_i$) des Empfangsimpulses ($E_i$), für den die Gruppe ($G_i$) erzeugt wurde.

2. Verfahren nach Anspruch 1, **dadurch gekennzeichnet,**
   **dass** die Sendeimpulse ($S_p$) mit im wesentlichen gleicher Amplitude ($a_s$) ausgesendet werden und für jeden Empfangsimpuls ($E_i$) auch dessen Amplitude ($a_i$) aufgezeichnet wird, und dass der Gewichtungswert ($W_{i,m}$) zumindest aus einem Entfernungsgewicht ($EG_{i,m}$) basierend auf der Entfernungsdifferenz zwischen der betrachteten Kandidatenentfernung ($d_{i,m}$) und der genannten ortsnächsten Kandidatenentfernung ($d_{j,n}$) und
   einem Amplitudengewicht ($AG_{i,m}$) basierend auf der Amplitudendifferenz zwischen der Amplitude ($a_i$) jenes einen Empfangsimpulses ($E_i$), für den die Gruppe ($G_i$) mit der betrachteten Kandidatenentfernung ($d_{i,m}$) erzeugt wurde, und der Amplitude ($a_j$) jenes anderen Empfangsimpulses ($E_j$), für den die Gruppe ($G_j$) mit der genannten ortsnächsten Kandidatenentfernung ($d_{j,n}$) erzeugt wurde,
   gebildet wird.

3. Verfahren nach Anspruch 2, **dadurch gekennzeichnet, dass** die Entfernungsdifferenz nicht-linear in das Entfernungsgewicht ($EG_{i,m}$) eingeht, wobei eine größere Entfernungsdifferenz ein unterproportional kleineres Entfernungsgewicht ergibt, und die Amplitudendifferenz nicht-linear in das Amplitudengewicht ($AG_{i,m}$) eingeht, wobei eine größere Amplitudendifferenz ein unterproportional kleineres Amplitudengewicht ergibt.

4. Verfahren nach einem der Ansprüche 1 bis 3, **dadurch gekennzeichnet, dass** beim Ermitteln des Gewichtungswerts ($W_{i,m}$) der genannte benachbarte Sendeimpuls ($S_p$) ein zeitlich benachbarter Sendeimpuls ist.

5. Verfahren nach Anspruch 4, **dadurch gekennzeichnet, dass** der Gewichtungswert ($W_{i,m}$) basierend zumindest auf der entfernungsnächsten der einem solchen Sendeimpuls zugeordneten Kandidatenentfernungen ($d_{j,n}$), welcher dem Sendeimpuls zeitlich vorangeht, dem die für dieses Ermitteln betrachtete Kandidatenentfernung ($d_{i,m}$) zugeordnet ist, und
   der entfernungsnächsten der einem solchen Sendeimpuls zugeordneten Kandidatenentfernungen ($d_{j,n}$), welcher dem Sendeimpuls zeitlich nachfolgt, dem die für dieses Ermitteln betrachtete Kandidatenentfernung ($d_{i,m}$) zugeordnet ist,
   ermittelt wird.

6. Verfahren nach Anspruch 1 zum Scannen einer Umgebung, wobei die Sendeimpulse ($S_p$) in ihrer zeitlichen Folge auf örtlich verschiedene Umgebungsziele ($U_p$) in der Umgebung (U) ausgesandt werden, **dadurch gekennzeichnet, dass** beim Ermitteln des Gewichtungswerts ($W_{i,m}$) der genannte benachbarte Sendeimpuls ($S_p$) ein hinsichtlich der Umgebungsziele örtlich benachbarter Sendeimpuls ist.

**7.** Verfahren nach Anspruch 6, **dadurch gekennzeichnet, dass** für das Ermitteln des Gewichtungswerts ($W_{i,m}$) mehrere örtlich benachbarte Sendeimpulse ($S_p$) herangezogen werden,
dass der Gewichtungswert ($W_{i,m}$) aus Teilgewichten ($PW_{i,m,k}$) gebildet wird, und
dass jedes Teilgewicht ($PW_{i,m,k}$) auf der entfernungsnächsten der dem jeweiligen örtlich benachbarten Sendeimpuls ($S_p$) zugeordneten Kandidatenentfernungen ($d_{j,n}$) basiert.

**8.** Verfahren nach Anspruch 7, **dadurch gekennzeichnet**, **dadurch gekennzeichnet, dass** die Sendeimpulse ($S_p$) mit im wesentlichen gleicher Amplitude ($a_s$) ausgesendet werden und für jeden Empfangsimpuls ($E_i$) auch dessen Amplitude ($a_i$) aufgezeichnet wird, und
dass jedes Teilgewicht ($PW_{i,m,k}$) zumindest aus
einem Entfernungsgewicht ($EG_{i,m,k}$) basierend auf der Entfernungsdifferenz zwischen der betrachteten Kandidatenentfernung ($d_{i,m}$) und der genannten jeweiligen ortsnächsten Kandidatenentfernung ($d_{j,n}$) und
einem Amplitudengewicht ($AG_{i,m,k}$) basierend auf der Amplitudendifferenz zwischen der Amplitude ($a_i$) jenes einen Empfangsimpulses ($E_i$), für den die Gruppe mit der betrachteten Kandidatenentfernung ($d_{i,m}$) erzeugt wurde, und der Amplitude ($a_j$) jenes anderen Empfangsimpulses ($E_j$), für den die Gruppe mit der genannten jeweiligen ortsnächsten Kandidatenentfernung ($d_{j,n}$) erzeugt wurde,
gebildet wird.

**9.** Verfahren nach Anspruch 8, **dadurch gekennzeichnet, dass** die Entfernungsdifferenz nicht-linear in das Entfernungsgewicht ($EG_{i,m,k}$) eingeht, wobei eine größere Entfernungsdifferenz ein unterproportional kleineres Entfernungsgewicht ergibt, und dass die Amplitudendifferenz nicht-linear in das Amplitudengewicht ($AG_{i,m,k}$) eingeht, wobei eine größere Amplitudendifferenz ein unterproportional kleineres Amplitudengewicht ergibt.

**10.** Verfahren nach einem der Ansprüche 1 bis 9, **dadurch gekennzeichnet, dass** beim Ermitteln des Gewichtungswerts ($W_{i,m}$) nur jene entfernungsnächste Kandidatenentfernungen ($d_{j,n}$) berücksichtigt werden, welche innerhalb eines vorgegebenen Entfernungsbereichs (b) rund um die betrachtete Kandidatenentfernung ($d_{i,m}$) liegen.

**11.** Verfahren nach einem der Ansprüche 1 bis 10, **dadurch gekennzeichnet, dass** beim Erzeugen der Gruppe ($G_i$) die genannten M Kandidatenentfernungen ($d_{i,m}$) auf M dem Empfangsimpuls ($E_i$) unmittelbar vorangegangene Sendeimpulse ($S_p$) bezogen werden.

**12.** Verfahren nach einem der Ansprüche 1 bis 11, **dadurch gekennzeichnet, dass** beim Aussenden die Impulsabstände ($\tau_p$) gemäß einem sich wiederholenden Code (C) variiert werden, dessen Codelänge (L) größer oder gleich M ist.

**Claims**

**1.** A method for measuring the distance of targets in the surroundings by measuring the time-of-flight of pulses reflected by said targets, in particular laser pulses, said method comprising:

emitting a sequence of transmission pulses ($S_p$) having varying pulse intervals ($\tau_p$), and receiving at least one receive pulse ($E_i$) after each one of two different transmission pulses;
for each receive pulse ($E_i$) : generating a group ($G_i$) of M candidate distances ($d_{i,m}$), each based on a different transmission pulse ($S_p$) among M transmission pulses preceding the receive pulse ($E_i$), wherein each candidate distance ($d_{i,m}$) is assigned to the corresponding transmission pulse ($S_p$) on which it is based;
**characterised by**:

for each candidate distance ($d_{i,m}$): determining a weighting value ($W_{i,m}$) on the basis of at least the closest one of the candidate distances ($d_{j,n}$) assigned to such a transmission pulse ($S_p$) which is adjacent to the transmission pulse ($S_p$) to which the candidate distance ($d_{i,m}$) being considered in this determining process is assigned;
for each group ($G_i$): selecting the candidate distance ($d_{i,m}$) with the highest weighting value ($W_{i,m}$) as the distance measurement value ($d_i$) of the receive pulse ($E_i$) for which the group ($G_i$) was generated.

**2.** The method according to claim 1, **characterised in that**
the transmission pulses ($S_p$) are emitted with substantially identical amplitude ($a_s$), and for each receive pulse ($E_i$) the amplitude thereof ($a_i$) is also recorded, and **in that** the weighting value ($W_{i,m}$) is formed at least from

a distance weight ($EG_{i,m}$) based on the distance difference between the candidate distance ($d_{i,m}$) under consideration and said closest candidate distance ($d_{j,n}$), and

an amplitude weight ($AG_{i,m}$) based on the amplitude difference between the amplitude ($a_i$) of that receive pulse ($E_i$) for which the group ($G_i$) comprising the candidate distance ($d_{i,m}$) under consideration was generated and the amplitude ($a_j$) of that other receive pulse ($E_j$) for which the group ($G_j$) comprising said closest candidate distance ($d_{j,n}$) was generated.

3.  The method according to claim 2, **characterised in that** the distance difference is incorporated non-linearly into the distance weight ($EG_{i,m}$), wherein a greater distance different results in an underproportionately smaller distance weight, and the amplitude difference is incorporated non-linearly into the amplitude weight ($AG_{i,m}$), wherein a greater amplitude difference results in an underproportionately smaller amplitude weight.

4.  The method according to any one of claims 1 to 3, **characterised in that** when determining the weighting value ($W_{i,m}$) said adjacent transmission pulse ($S_p$) is a temporally adjacent transmission pulse.

5.  The method according to claim 4, **characterised in that** the weighting value ($W_{i,m}$) is determined based at least on the closest one of the candidate distances ($d_{j,n}$) assigned to that transmission pulse which temporally precedes the transmission pulse to which the candidate distance ($d_{i,m}$) considered for this determination is assigned, and the closest one of the candidate distances ($d_{j,n}$) assigned to that transmission pulse which temporally follows the transmission pulse to which the candidate distance ($d_{i,m}$) considered for this determination is assigned.

6.  The method according to claim 1 for scanning a surroundings area, wherein the transmission pulses ($S_p$) are emitted in their temporal sequence to locally different targets ($U_p$) in the surroundings ($U$), **characterised in that** in the determination of the weighting value ($W_{i,m}$) said adjacent transmission pulse ($S_p$) is a transmission pulse locally adjacent in respect of the targets in the surroundings.

7.  The method according to claim 6, **characterised in that** a plurality of locally adjacent transmission pulses ($S_p$) are used for the determination of the weighting value ($W_{i,m}$), **in that** the weighting value ($W_{i,m}$) is formed from partial weights ($PW_{i,m,k}$) , and **in that** each partial weight ($PW_{i,m,k}$) is based on the closest one of the candidate distances ($d_{j,n}$) assigned to the respective locally adjacent transmission pulse ($S_p$).

8.  The method according to claim 7, **characterised in that** the transmission pulses ($S_p$) are emitted with substantially identical amplitude ($a_s$) and for each receive pulse ($E_i$) the amplitude ($a_i$) thereof is also recorded, and **in that** each partial weight ($PW_{i,m,k}$) is formed at least from a distance weight ($EG_{i,m,k}$) based on the distance difference between the candidate distance ($d_{i,m}$) under consideration and the aforementioned respective closest candidate distance ($d_{j,n}$) , and an amplitude weight ($AG_{i,m,k}$) based on the amplitude difference between the amplitude ($a_i$) of that receive pulse ($E_i$) for which the group comprising the candidate distance ($d_{i,m}$) under consideration was generated, and the amplitude ($a_j$) of that other receive pulse ($E_j$) for which the group comprising the aforementioned respective closest candidate distance ($d_{j,n}$) was generated.

9.  The method according to claim 8, **characterised in that** the distance difference is incorporated non-linearly into the distance weight ($EG_{i,m,k}$), wherein a greater distance difference results in an underproportionately smaller distance weight, and **in that** the amplitude difference is incorporated non-linearly into the amplitude weight ($AG_{i,m,k}$), wherein a greater amplitude difference results in an underproportionately smaller amplitude weight.

10. The method according to any one of claims 1 to 9, **characterised in that** when determining the weighting value ($W_{i,m}$) only the closest candidate distances ($d_{j,n}$) which lie within a predefined distance range ($b$) around the considered candidate distance ($d_{i,m}$) are taken into consideration.

11. The method according to any one of claims 1 to 10, **characterised in that** when generating the group ($G_i$) said M candidate distances ($d_{i,m}$) are based on M transmission pulses ($S_p$) directly preceding the receive pulse ($E_i$).

12. The method according to any one of claims 1 to 11, **characterised in that**, during emission, the pulse distances ($L_p$) are varied in accordance with a repeating code ($C$), the code length ($L$) of which is greater than or equal to M.

**Revendications**

1. Procédé de mesure de distance par rapport à des cibles environnantes par la mesure du temps de propagation d'impulsions s'y réfléchissant, notamment d'impulsions laser, comprenant :

   l'émission d'une suite d'impulsions d'émission ($S_p$) avec des intervalles d'impulsion ($\tau_p$) variables et la réception d'au moins une impulsion de réception ($E_i$) après respectivement l'une de deux impulsions d'émission différentes ;
   pour chaque impulsion de réception ($E_i$) : la création d'un groupe ($G_i$) de M distances candidates ($d_{i,m}$) se rapportant respectivement à une impulsion autre que les M impulsions d'émission ($S_p$) précédant l'impulsion de réception ($E_i$), où chaque distance candidate ($d_{i,m}$) est associée à l'impulsion d'émission ($S_p$) à laquelle elle se rapporte ;
   **caractérisé par** :

   pour chaque distance candidate ($d_{i,m}$) : la détermination d'une valeur de pondération ($W_{i,m}$) se basant au moins sur la distance candidate ($d_{j,n}$) la plus proche en distance parmi les distances candidates associées à une telle impulsion d'émission ($S_p$) quelle est au voisinage de l'impulsion d'émission ($S_p$) à laquelle est associée la distance candidate ($d_{i,m}$) considérée pour cette détermination ;
   pour chaque groupe ($G_i$) : le choix de la distance candidate ($d_{i,m}$) avec la valeur de pondération la plus élevée ($W_{i,m}$) en tant que valeur de distance ($d_i$) de l'impulsion d'émission ($E_i$), pour laquelle le groupe ($G_i$) a été créé.

2. Procédé selon la revendication 1, **caractérisé en ce que** les impulsions d'émission ($S_p$) sont émises avec une essentiellement même amplitude ($a_s$) et que, pour chaque impulsion de réception ($E_i$), son amplitude ($a_i$) est également reportée, et que la valeur de pondération ($W_{i,m}$) est formée au moins par
   une pondération de distance ($EG_{i,m}$) se basant sur la différence de distance entre la distance candidate ($d_{i,m}$) considérée et ladite distance candidate ($d_{j,n}$) la plus proche, et
   une pondération d'amplitude ($AG_{i,m}$) se basant sur la différence d'amplitude entre l'amplitude ($a_i$) de cette une impulsion de réception ($E_i$) pour laquelle le groupe ($G_i$) avec la distance candidate ($d_{i,m}$) considérée a été créé, et l'amplitude ($a_j$) de cette autre impulsion de réception ($E_j$) pour laquelle le groupe ($G_j$) avec ladite distance candidate ($d_{j,n}$) la plus proche a été créé.

3. Procédé selon la revendication 2, **caractérisé en ce que** la différence de distance intervient dans la pondération de distance ($EG_{i,m}$) dans une manière non-linéairement, une différence de distance plus élevée donnant lieu à une pondération de distance sous-proportionnellement plus petite, et que la différence d'amplitude intervient dans la pondération de l'amplitude ($AG_{i,m}$) dans une manière non-linéairement, une différence d'amplitude plus élevée donnant lieu à une pondération d'amplitude sous-proportionnellement plus petite.

4. Procédé selon l'une des revendications 1 à 3, **caractérisé en ce que**, lors de la détermination de la valeur de pondération ($W_{i,m}$), ladite impulsion d'émission ($S_p$) voisine est une impulsion d'émission voisine dans le temps.

5. Procédé selon la revendication 4, **caractérisé en ce que** la valeur de pondération ($W_{i,m}$) est déterminée en se basant au moins sur
   la distance candidate ($d_{j,n}$) la plus proche en distance parmi les distances candidates associées à une telle impulsion d'émission quelle est temporellement juste avant l'impulsion d'émission à laquelle est associée la distance candidate ($d_{i,m}$) considérée pour cette détermination, et
   la distance candidate ($d_{j,n}$) la plus proche en distance parmi les distances candidates associées à une telle impulsion d'émission quelle est temporellement juste après l'impulsion d'émission à laquelle est associée la distance candidate ($d_{i,m}$) considérée pour cette détermination.

6. Procédé selon la revendication 1, permettant de balayer un environnement, dans lequel les impulsions d'émission ($S_p$) sont émises dans leur suite temporelle vers des cibles d'environnement ($U_p$) des lieux différentes dans l'environnement (U), **caractérisé en ce que**, lors de la détermination des valeurs de pondération ($W_{i,m}$), ladite impulsion d'émission ($S_p$) voisine est une impulsion d'émission voisine en lieu en ce qui concerne les cibles d'environnement.

7. Procédé selon la revendication 6, **caractérisé en ce que**, pour la détermination de la valeur de pondération ($W_{i,m}$), plusieurs impulsions d'émission ($S_p$) voisines en lieu sont prises en considération,

**que** la valeur de pondération ($W_{i,m}$) est formée par des pondérations partielles ($PW_{i,m,k}$), et
**que** chaque pondération partielle ($PW_{i,m,k}$) est basée sur la distance candidate la plus proche parmi les distances candidates ($d_{j,n}$) associées à l'impulsion d'émission ($S_p$) voisine en lieu respective.

8. Procédé selon la revendication 7, **caractérisé en ce**
**que** les impulsions d'émission ($S_p$) sont émises avec une amplitude ($a_s$) essentiellement identique et que, pour chaque impulsion de réception ($E_i$), son amplitude ($a_i$) est également reportée, et
**que** chaque pondération partielle ($PW_{i,m,k}$) est formée au moins à base
d'une pondération de distance ($EG_{i,m,k}$) se basant sur la différence de distance entre la distance candidate ($d_{i,m}$) considérée et ladite distance candidate ($d_{j,n}$) la plus proche en lieu, et
d'une pondération d'amplitude ($AG_{i,m,k}$) se basant sur la différence d'amplitude entre l'amplitude ($a_i$) de cette impulsion de réception ($E_i$) pour laquelle le groupe avec la distance candidate ($d_{i,m}$) considérée a été créé, et l'amplitude ($a_j$) de cette autre impulsion de réception ($E_j$) pour laquelle le groupe avec ladite distance candidate ($d_{j,n}$) la plus proche en lieu a été créé.

9. Procédé selon la revendication 8, **caractérisé en ce que** la différence de distance intervient dans la pondération de distance ($EG_{i,m,k}$) dans une manière non-linéairement, une différence de distance plus élevée donnant lieu à une pondération de distance sous-proportionnellement plus petite, et que la différence d'amplitude intervient dans la pondération de l'amplitude ($AG_{i,m}$) dans une manière non-linéairement, une différence d'amplitude plus élevée donnant lieu à une pondération d'amplitude sous-proportionnellement plus petite.

10. Procédé selon l'une des revendications 1 à 9, **caractérisé en ce que**, lors de la détermination de la valeur de pondération ($W_{i,m}$), uniquement telles distances candidates ($d_{j,n}$) les plus proches sont considérées quelles se situent à l'intérieur d'une zone de distances ($b$) prédéfinie autour de la distance candidate ($d_{i,m}$) considérée.

11. Procédé selon l'une des revendications 1 à 10, **caractérisé en ce que**, lors de la création du groupe ($G_i$), lesdites M distances candidates ($d_{i,m}$) se rapportent à M impulsions d'émission ($S_p$) précédant immédiatement l'impulsion de réception ($E_i$).

12. Procédé selon l'une des revendications 1 à 11, **caractérisé en ce que**, lors de l'émission, les intervalles d'impulsions ($L_p$) sont variés selon un code ($C$) se répétant dont la longueur de code ($L$) est supérieure ou égale à M.

**Fig. 2** (Stand der Technik)

**Fig. 1** (Stand der Technik)

**Fig. 3**

**Fig. 4**

*Fig. 5*

EP 3 267 224 B1

Fig. 6

*Fig. 7*

Fig. 8

Fig. 9a

Fig. 9b

**Fig. 10a**

**Fig. 10b**

**IN DER BESCHREIBUNG AUFGEFÜHRTE DOKUMENTE**

**In der Beschreibung aufgeführte Patentdokumente**

- US 4688044 A
- AT 510296
- AT 511310
- AT 515214